# EUROPÄISCHE PATENTANMELDUNG

(11) **EP 4 391 319 A1**
(43) Veröffentlichungstag der Anmeldung: **26.06.2024**
(21) Anmeldenummer: 22215836.2
(22) Anmeldetag: 22.12.2022
(51) Int. Cl.: H02K 3/34, H02K 3/487, H02K 15/00, H02K 15/10

(54) **VERFAHREN ZUR HERSTELLUNG EINES STATORS FÜR EINE ELEKTRISCHE ROTIERENDE MASCHINE, STATOR, ELEKTRISCHE ROTIERENDE MASCHINE UND FAHRZEUG**

(71) Anmelder: Valeo eAutomotive Germany GmbH, 91056 Erlangen (DE)
(72) Erfinder: Balling, Dominik, 97616 Bad Neustadt a.d.Saale (DE); Volkmuth, Florian, 97616 Bad Neustadt a.d.Saale (DE); Menz, Michael, 97616 Bad Neustadt a.d.Saale (DE); Hellmuth, Stephan, 97616 Bad Neustadt a.d.Saale (DE)
(74) Vertreter: Valeo Powertrain Systems

(57) **Zusammenfassung**

Stator (1) für eine elektrische Maschine (101), aufweisend
- einen Statorkern (2), welcher eine Längsachse (3), eine Stirnseite (4), eine der Stirnseite (4) gegenüberliegende weitere Stirnseite (5), eine Nut (6) aufweist, die sich von der Stirnseite (4) zur weiteren Stirnseite (5) erstreckt und einen Rand (17) aufweist,
- eine Wicklungsanordnung (11), die eine Reihung (12) innerhalb der Nut (6) angeordneter Leiterabschnitte (13) aufweist und
- eine die Reihung (12) Leiterabschnitte (13) einhüllende elektrisch isolierende Nutauskleidung (22), und
- ein Nutabschlusselement (18), das zwischen der elektrisch isolierenden Nutauskleidung (22) und der Reihung (12) Leiterabschnitte (13) angeordnet ist.

## Beschreibung

Die vorliegende Erfindung betrifft einen Stator für eine elektrische Maschine, aufweisend einen Statorkern, welcher eine Längsachse, eine Stirnseite, eine der Stirnseite gegenüberliegende weitere Stirnseite, eine Nut aufweist, die sich von der Stirnseite zur weiteren Stirnseite erstreckt und einen Rand aufweist, eine Wicklungsanordnung, die eine Reihung innerhalb der Nut angeordneter Leiterabschnitte aufweist und eine die Reihung Leiterabschnitte einhüllende elektrisch isolierende Nutauskleidung, und ein Nutabschlusselement, das zwischen der elektrisch isolierenden Nutauskleidung und der Reihung Leiterabschnitte angeordnet ist.

Daneben betrifft die Erfindung ein Verfahren zur Herstellung eines Stators für eine elektrische Maschine, eine elektrische Maschine und ein Fahrzeug.

Statoren mit einem Statorkern der aus einem geschichteten Blechpaket gebildet ist, einer innerhalb des Statorkerns angeordneten Wicklungsanordnung und einem Nutabschlusselement sind allgemein bekannt. Das Nutabschlusselement dient insbesondere dazu, die Kupferverluste, die durch Proximity- und Skin-effekt entstehen klein zu halten und die Stromdichte zu erhöhen. Die Leiterabschnitte sollen daher möglichst nah an einem Joch des Statorkerns positioniert werden. Es ist bekannt hierzu ein Nutabschlusselement in Form eines Nutkeils zwischen einer isolierenden Nutauskleidung und dem Rand eines Stators anzuordnen. Durch die geschichteten Blechpakete kann die Nut scharfe Kanten aufweisen und beim Einführen des Nutabschlusselements kann dieses beschädigt werden.

Der Erfindung liegt die Aufgabe zugrunde, eine verbesserte Möglichkeit zum Abschließen einer Nut eines Statorkerns anzugeben.

Diese Aufgabe wird erfindungsgemäß bei einem Stator der eingangs genannten Art dadurch gelöst, dass das Nutabschlusselement zwischen der elektrisch isolierenden Nutauskleidung und der Reihung an Leiterabschnitte angeordnet ist.

Der erfindungsgemäße Stator für eine elektrische Maschine weist einen Statorkern auf. Der Statorkern weist eine Längsachse auf. Der Statorkern weist ferner eine Stirnseite auf. Der Statorkern weist ferner eine weitere Stirnseite auf. Die weitere Stirnseite liegt der Stirnseite gegenüber. Der Statorkern weist ferner eine Nut auf. Die Nut erstreckt sich von der Stirnseite zur weiteren Stirnseite. Die Nut weist einen Rand auf. Der Stator weist ferner eine Wicklungsanordnung auf. Die Wicklungsanordnung weist eine Reihung Leiterabschnitte, die innerhalb der Nut angeordnet ist auf. Die Wicklungsanordnung weist auch eine die Reihung Leiterabschnitte einhüllende elektrisch isolierende Nutauskleidung und ein Nutabschlusselement auf. Das Nutabschlusselement ist zwischen der elektrisch isolierenden Nutauskleidung und der Reihung Leiterabschnitte angeordnet.

Durch die erfindungsgemäß vorgesehene Position des Nutabschlusselementes wird das Nutabschlusselement beim Einführen vor einer eventuellen Beschädigung durch hervorstehende Kanten der Lamellen des Blechpakets geschützt. Dies stabilisiert den Fertigungsprozess.

Die Nutauskleidung kann sich insbesondere um eine parallel zur Längsachse liegende, entlang der Nut verlaufenden Achse erstrecken.

Die Nutauskleidung kann die Reihung Leiterabschnitte derart einhüllen, dass die Leiterabschnitte vollständig gegenüber dem Statorkern elektrisch isoliert sind. Die Nutauskleidung kann aus einem Isolationspapier, das insbesondere mehrfach und/oder sich überlappend gefaltet ist, gebildet sein.

Der Statorkern kann weitere Nuten aufweisen, die sich jeweils von der Stirnseite zur weiteren Stirnseite erstrecken. Die Wicklungsanordnung kann weitere Reihungen Leiterabschnitte aufweisen, die jeweils innerhalb einer der weiteren Nuten angeordnet und jeweils von einer der weiteren elektrisch isolierenden Nutauskleidungen eingehüllt sind. Für jede weitere Reihung Leiterabschnitte kann ein weiteres Nutabschlusselement vorgesehen sein, das innerhalb der weiteren Nut zwischen der weiteren elektrisch isolierenden Nutauskleidung und der Reihung Leiterabschnitte angeordnet sein kann.

Der Statorkern kann aus einer Vielzahl von in axialer Richtung geschichteten und/oder gegeneinander isolierten Einzelblechen ausgebildet sein. Der Statorkern kann insoweit auch als Statorblechpaket bezeichnet oder erachtet werden. Der Statorkern kann ferner ein Joch aufweisen, welches die Nut an ihrer dem Rand radial gegenüberliegenden Seite begrenzt. Der Statorkern kann einen Aufnahmebereich für einen Rotor der elektrischen Maschine begrenzen. Der Rand kann dem Aufnahmebereich zugewandt sein. Vorzugsweise bildet der Statorkern eine radial äußere Begrenzung des Aufnahmebereichs aus. Der Statorkern kann mehrere Zähne aufweisen. Zwischen einem Paar der Zähne kann die oder eine jeweilige Nut ausgebildet sein. Die Zähne können eine die Nut mit dem Aufnahmebereich verbindende Nutöffnung ausbilden. Das Nutabschlusselement kann mit der elektrisch isolierenden Nutauskleidung die Nutöffnungen verschließen.

Der Rand kann an einer radial inneren Seite der Nut angeordnet sein.

Das Nutabschlusselement kann in die Nut eingepresst sein.

Das Nutabschlusselement kann aus einem dielektrischen Material ausgebildet sein.

In bevorzugter Ausgestaltung kann das Nutabschlusselement streifenförmig ausgebildet sein.

Das Nutabschlusselement kann bevorzugt adhäsiv an der Nutauskleidung befestigt sein. D.h. das Nutabschlusselement kann mittels eines Klebstoffs an der elektrisch isolierenden Nutauskleidung befestigt sein.

Das Nutabschlusselement kann einen Trägerstreifen aufweisen, der auf einer ersten Seite, die der elektrisch isolierenden Nutauskleidung zugewandt ist, eine adhäsiven Schicht aufweist.

Der Trägerstreifen kann eine der Reihung Leiterabschnitte zugewandte zweite Seite aufweisen. Durch den Trägerstreifen wird insbesondere ein nicht von den Leiterabschnitten eingenommener Raum innerhalb der Nut ausgefüllt, sodass die Leiterabschnitte am Joch anliegen.

Bevorzugt kann der Trägerstreifen derart elastisch ausgebildet sein, dass er im in der Nut angeordneten Zustand eine vom Rand in Richtung des Joch wirkende Rückstellkraft auf die Leiterabschnitte ausübt.

Das Nutabschlusselement kann durch eine Folie oder einen, insbesondere elastischen, Schaum ausgebildet sein. Ein Material des Nutabschlusselements kann einen Kunststoff und/oder ein Papier und/oder ein Metall und/oder ein textiles Gewebe umfassen. Besonders bevorzugt ist der Kunststoff Polytetrafluoräthylen (PTFE). Der Trägerstreifen kann eine Dicke zwischen 0,1 und 1,0 mm, insbesondere zwischen 0,3 und 0,7 mm, aufweisen.

Das Nutabschlusselement kann außerdem einen weiteren Trägerstreifen aufweisen, wobei die Trägerstreifen zueinander radialgeschichtet angeordnet und adhäsiv aneinander befestigt sein können. So lassen sich auch größere Radialabstände zwischen dem Rand und der Reihung Leiterabschnitte durch das Nutabschlusselement ausfüllen. Selbstverständlich können auch mehrere weitere Trägerstreifen vorgesehen sein.

Vorzugsweise weist das Nutabschlusselement auf seiner der Reihung Leiterabschnitte zugewandten Seite eine die Gleitreibung des Trägerstreifens gegenüber den Leiterabschnitten reduzierende Oberflächenschicht auf. Dadurch kann ein Einführen des Nutabschlusselementes in die Nut vereinfacht werden, da die Oberflächenschicht leicht an den Leiterabschnitten entlanggleiten kann.

Außerdem kann die Gefahr einer Beschädigung des Trägerstreifens und/oder der Leiterabschnitte verringert werden.

Die Wicklungsanordnung des erfindungsgemäßen Stators kann elektrisch leitfähige Leiter aufweisen. Die Leiter können Leiterabschnitte, aufweisen, die sich von der Stirnseite zur weiteren Stirnseite durch die Nut erstrecken. Die Leiter sind vorzugsweise aus Kupfer gebildet. Vorzugsweise sind die Leiter gegeneinander elektrisch isoliert. Die Leiter können separate Strompfade der Wicklungsanordnung ausbilden.

Die Leiter können insbesondere als Formleiter ausgebildet sein.

Die Reihung Leiterabschnitte kann einreihig in Radialrichtung in die Nut geschichtet sein.

Die Leiterabschnitte können in Radialrichtung einreihig in der Nut geschichtete Formleiter sein, die eine Haarnadelwicklung ausbilden.

Vorzugsweise sind wenigstens vier, bevorzugt wenigstens sechs, besonders bevorzugt wenigstens acht Formleiter innerhalb der Nut angeordnet. Es können außerdem höchstens 20, bevorzugt höchstens 16, besonders bevorzugt höchstens zwölf Formleiter in der Nut angeordnet sein. Die Formleiter weisen insbesondere eine rechteckige oder abgerundet rechteckige Querschnittsfläche auf.

Ein jeweiliger Formleiter kann einen Kopfabschnitt und zwei in unterschiedlichen Nuten angeordnete Beinabschnitte aufweisen, die an der Stirnseite elektrisch leitfähig durch den Kopfabschnitt miteinander verbunden sind. An der weiteren Stirnseite kann ein jeweiliger Beinabschnitt des Formleiters mit dem Beinabschnitt eines anderen Formleiters stoffschlüssig, insbesondere mittels einer Schweißverbindung, elektrisch leitfähig verbunden sein. Vorzugsweise ist jeder Formleiter aus einem mehrfach gebogenen Metallstab gebildet. Vorzugsweise sind die Beinabschnitte und der Kopfabschnitt einstückig ausgebildet.

D. h. Die Formleiter können als sogenannte U- oder I-Pins ausgebildet sein. In bevorzugter Ausgestaltung können die Leiter eine Haarnadelwicklung ausbilden.

Die der Erfindung zugrunde liegende Aufgabe wird ferner gelöst durch ein Verfahren zur Herstellung eines Stators für eine elektrische Maschine, aufweisend folgende Schritte: Bereitstellen eines Statorkerns, welcher eine Längsachse, eine Stirnseite, eine der Stirnseite gegenüberliegende weitere Stirnseite und eine Nut aufweist, die sich von der Stirnseite zur weiteren Stirnseite erstreckt und einen Rand aufweist; und Anordnen einer elektrisch isolierende Nutauskleidung in der Nut, Anordnen eines Nutabschlusselementes und einer Wicklungsanordnung im Statorkern derart, dass sich der Nutabschlusselement zwischen der elektrisch isolierende Nutauskleidung und der Wicklungsanordnung innerhalb der Nut erstreckt.

Vorzugsweise ist bei dem erfindungsgemäßen Verfahren vorgesehen, dass die Wicklungsanordnung eine Reihung elektrisch leitfähige Leiterabschnitte, die sich durch die Nut erstrecken aufweist.

Außerdem kann das Anordnen des Nutabschlusselementes und der Wicklungsanordnung folgende Schritte umfassen: Bereitstellen eines aufgerollten Materials für die Nutauskleidung; Abrollen des Materials; Abtrennen und Falten des mit dem Nutabschlusselement versehenen Materials zur Ausbildung der Nutauskleidung. So kann das Ausbilden des Nutabschlusselementes in den Prozess der Herstellung der Nutauskleidung integriert werden.

Außerdem kann das Anordnen des Nutabschlusselementes und der Wicklungsanordnung folgenden Schritt umfassen: adhäsives Befestigen des Nutabschlusselementes auf dem Material während des Abrollens.

Gemäß einer ersten Alternative kann vorgesehen sein, dass das Anordnen des Nutabschlusselementes und der Wicklungsanordnung folgende Schritte umfasst: Anordnen der mit dem Nutabschlusselement versehenen Nutauskleidung in der Nut und anschließendes Anordnen der Leiterabschnitte innerhalb der Nutauskleidung.

Gemäß einer zweiten Alternative kann vorgesehen sein, dass das Anordnen des Nutabschlusselementes und der Wicklungsanordnung folgende Schritte umfasst: Anordnen der Leiterabschnitte in der mit dem Nutabschlusselement versehenen Nutauskleidung außerhalb des Statorkerns und anschließendes gemeinsames Anordnen der Leiterabschnitte und der Nutauskleidung in der Nut.

Die der Erfindung zugrundeliegende Aufgabe wird ferner gelöst durch eine elektrische Maschine, aufweisend einen erfindungsgemäßen Stator oder einen durch ein erfindungsgemäßes Verfahren erhaltenen Stator, wobei die elektrische Maschine ferner einen drehbar bezüglich des Stators gelagerten Rotor aufweist.

Die elektrische Maschine ist vorzugsweise eine Synchronmaschine oder eine Asynchronmaschine. Der Rotor ist vorzugsweise fremderregt oder permanenterregt.

Die der Erfindung zugrundeliegende Aufgabe wird ferner gelöst durch ein Fahrzeug, aufweisend eine erfindungsgemäße elektrische Maschine, die zum Antreiben des Fahrzeugs eingerichtet ist. Das Fahrzeug kann ein batterieelektrisches Fahrzeug oder ein Hybridfahrzeug sein.

Sämtliche Ausführungen zum erfindungsgemäßen Stator lassen sich analog auf das erfindungsgemäße Verfahren, die erfindungsgemäße elektrische Maschine und das erfindungsgemäße Fahrzeug übertragen, sodass auch mit diesen die zuvor genannten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine perspektivische Ansicht eines Ausführungsbeispiels des erfindungsgemäßen Stators;
- Fig. 2: eine geschnittene Detailansicht der Nutauskleidung und des Nutabschlusselements
- Fig. 3: eine geschnittene Detailansicht von Nuten des in Fig. 1 gezeigten Stators;
- Fig. 4: ein Flussdiagramm eines ersten Ausführungsbeispiels des erfindungsgemäßen Verfahrens;
- Fig. 5: ein Ausschnitt eines Flussdiagramms gemäß einem zweiten Ausführungsbeispiel des erfindungsgemäßen Verfahrens; und
- Fig. 6: eine Prinzipskizze eines Ausführungsbeispiels des erfindungsgemäßen Fahrzeugs mit einem Ausführungsbeispiel der erfindungsgemäßen elektrischen Maschine.

Der Stator 1 weist einen Statorkern 2 auf, welcher eine Längsachse 3, eine Stirnseite 4 und eine der Stirnseite 4 gegenüberliegende weitere Stirnseite 5 aufweist. Nuten 6 des Statorkerns 1, erstrecken sich von der Stirnseite 4 zur weiteren Stirnseite 5.

Im vorliegenden Ausführungsbeispiel ist der Statorkern 2 aus einer Vielzahl von in axialer Richtung geschichteten und gegeneinander elektrisch isolierten Einzelblechen (nicht gezeigt) ausgebildet.

Daneben weist der Stator 1 eine Wicklungsanordnung 11 mit Leiterabschnitten 13 auf, die innerhalb der Nuten 6 angeordnet sind. Die Wicklungsanordnung 11 weist eine Vielzahl elektrisch leitfähiger Leiterabschnitte 13 auf, die sich von der Stirnseite 4 zur weiteren Stirnseite 5 durch die Nuten 6 erstrecken.

Im vorliegenden Ausführungsbeispiel bilden die Leiterabschnitte 13 exemplarisch eine Haarnadelwicklung aus. Die Leiterabschnitte 13 sind dabei durch Formleiter 14, ausgebildet. Ein jeweiliger Formleiter weist einen Kopfabschnitt 15 und zwei Beinabschnitte 16 auf, die an der Stirnseite 4 elektrisch leitfähig durch den Kopfabschnitt 15 miteinander verbunden sind. An der weiteren Stirnseite 5 ist ein jeweiliger Beinabschnitt 16 mit dem Beinabschnitt 16 eines anderen Formleiters mittels einer Schweißverbindung elektrisch leitfähig verbunden. Jeder Formleiter ist aus einem mehrfach gebogenen Kupferstab gebildet, wobei die Beinabschnitte 16 und der Kopfabschnitt 15 einstückig ausgebildet sind.

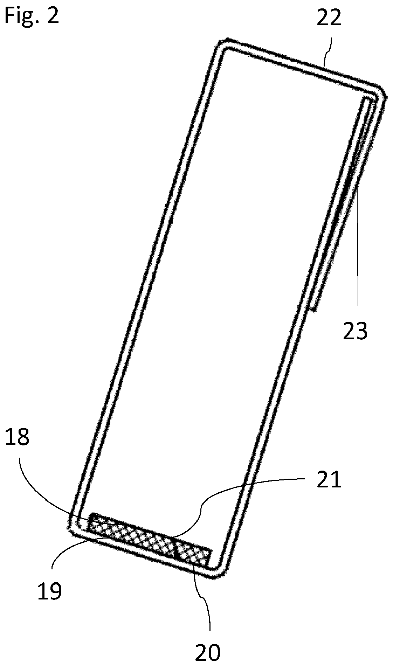

Fig. 2 ist eine geschnittene Detailansicht einer Nutauskleidung 22 und dem daran angebrachten Nutabschlusselement 18.

Die Nutauskleidung 22 ist einstückig und an einer Seite überlappend gefaltet. Die Überlappung befindet sich an der dem Joch zugewandten Seite. Das Nutabschlusselement 18 befindet sich an der dem Aufnahmeraum eines Rotors zugewandten Seite. Das Nutabschlusselement 18 ist adhäsiv mit der ersten Seite 20 des Trägerstreifens 19 an der Nutauskleidung 22 befestigt. Die zweite Seite 21 zeigt in den für die Leiterabschnitte vorgesehenen Raum.

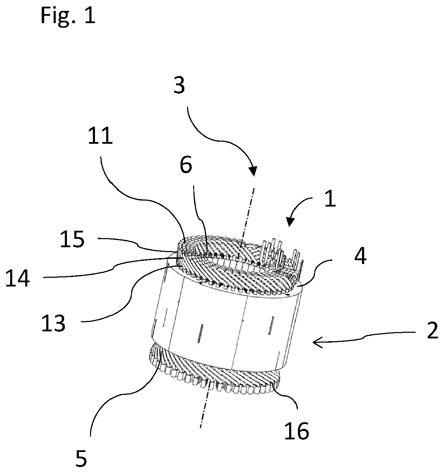

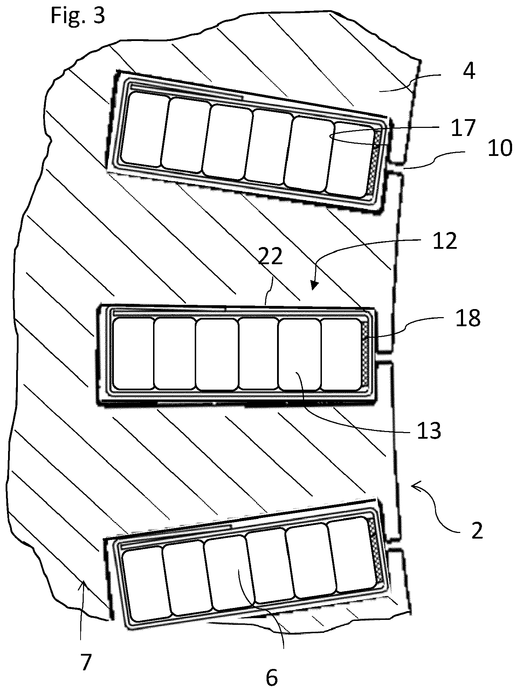

Fig. 3 ist eine geschnittene Detailansicht eines Teils des in Fig. 1 gezeigten Stators 1, repräsentativ für den gesamten Stator 1.

In der exemplarischen Ausgestaltung mit einer Haarnadelwicklung ist die Reihung 12 Leiterabschnitte 13 radial geschichtet und gegeneinander elektrisch isoliert in der Nut 6 angeordnet. Exemplarisch sind hier sechs Formleiter innerhalb der Nut 6 angeordnet.

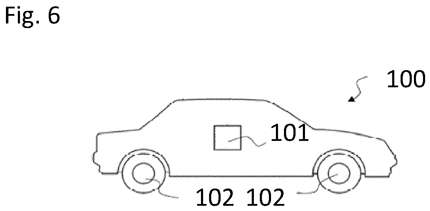

Der Statorkern 2 weist ferner ein Joch 7 auf, welches die Nuten 6 an einer radialen Seite begrenzt. Der Statorkern 2 begrenzt darüber hinaus einen Aufnahmebereich 8 für einen Rotor (vgl. Fig. 6). Der Aufnahmebereich 8 befindet sich auf der dem Joch 7 gegenüberliegenden Seite des Statorkerns 2. Zu sehen sind ferner mehrere Zähne 9 des Statorkerns 2. Zwischen einem jeweiligen Paar der Zähne 9 ist eine der Nuten 6 ausgebildet, die durch eine Nutöffnung 10 mit dem Aufnahmebereich 8 verbunden ist.

Die Nut 6 weist in Radialrichtung einen Rand 17 auf. Der Rand 17 liegt dem Joch 7 gegenüber, welches die Nut 6 begrenzt. Exemplarisch liegt der Rand 17 radial innen und das Joch 7 radial außen. Der Stator 1 zeichnet sich durch einen innerhalb der Nut 6 zwischen der Reihung 12 der Leiterabschnitte und dem Rand 17 angeordneten Nutabschluss 18 aus, der adhäsiv an der Nutauskleidung 22 befestigt ist. Die Nutauskleidung 22 umhüllt die gesamte Reihung 12 Leiterabschnitte 13. Die Nutauskleidung 22 liegt an der Nut 6 an.

Der Nutabschluss 18 weist einen Trägerstreifen 19 mit einer ersten Seite 20 und einer zweiten Seite 21 auf. Die erste Seite 20 weist zur Nutauskleidung 22. Die zweite Seite 21 weist zur Reihung 12 der Leiterabschnitt 13. Der Trägerstreifen 19 kann durch eine Folie oder einen elastischen Schaum ausgebildet sein. Der Trägerstreifen ist beispielsweise aus einem Kunststoff wie PTFE, Papier oder einem textilen Gewebe ausgebildet. Eine Dicke des Trägerstreifens 19 beträgt zum Beispiel 0,5 mm.

Die Wicklungsanordnung 11 weist ferner eine elektrisch isolierende Nutauskleidung 22 auf, die sich in der Nut 6 von der Stirnseite 4 zur weiteren Stirnseite 5 erstreckt (vergleiche Fig. 1) und innerhalb der Nut die Leiterabschnitte 13 einhüllt. Die Nutauskleidung 22 ist hier durch ein Isolierpapier, das axial überlappend gefaltet ist, ausgebildet. Der Nutabschluss 18 ist unmittelbar adhäsiv an der Nutauskleidung 22 befestigt.

Gemäß einem weiteren Ausführungsbeispiel weist der Nutabschluss 18 neben dem Trägerstreifen 19 weitere Trägerstreifen (nicht gezeigt) auf. Die Trägerstreifen sind zueinander radial geschichtet angeordnet und adhäsiv aneinander befestigt sind. Dazu ist die erste Seite eines jeweiligen weiteren Trägerstreifens adhäsiv auf der zweiten Seite des radial jochseitig benachbarten Trägerstreifens befestigt.

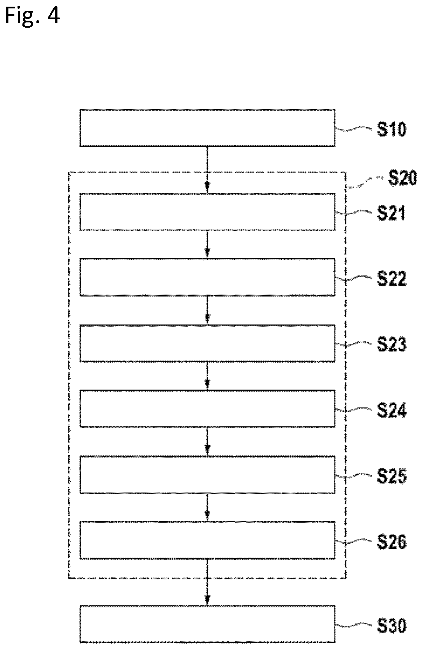

Fig. 4 ist ein Flussdiagramm eines ersten Ausführungsbeispiels eines Verfahrens zur Herstellung eines Stators 1 gemäß einem der zuvor beschriebenen Ausführungsbeispiele.

In einem ersten Schritt S10 wird der Statorkern 2 bereitgestellt. In einem anschließenden Schritt S20 werden der Nutabschluss 18 und die Wicklungsanordnung 11 derart im Statorkern 2 angeordnet, dass die Leiterabschnitte 13 der Wicklungsanordnung 11 radial außen von dem Nutabschlusselement 18 in der Nutauskleidung 22 angeordnet ist.

Im vorliegenden Ausführungsbeispiel weist der Schritt S20 folgende Schritte S21 bis S26 auf:
Im Schritt S21 wird ein aufgerolltes Material für die Nutauskleidung 22 bereitgestellt. Das Material ist beispielsweise ein mit einem elektrisch isolierenden Harz getränktes Papier und wird als Endlosmaterial bereitgestellt. Im Schritt S22 wird das Material abgerollt. Während des Abrollens wird der Nutabschluss 18 im Schritt S23 adhäsiv auf dem Material befestigt. Anschließend wird das mit dem Nutabschluss 18 versehene Material im Schritt S24 abgetrennt und zur Ausbildung der Nutauskleidung 22 gefaltet. Im anschließenden Schritt S25 wird die mit dem Nutabschluss 18 versehene Nutauskleidung 22 in der Nut 6 angeordnet. Danach werden im Schritt S26 die Leiterabschnitte 13 innerhalb der Nutauskleidung 22 angeordnet.

Optional ist während des Schritts S25 ein die Gleitreibung zwischen dem Rand 17 und dem Nutabschluss 18 reduzierendes Element zwischen den Leiterabschnitten 13 und dem Nutabschluss 18 vorgesehen. Dieses kann dann in einem auf den Schritt S20 folgenden Schritt S30 entfernt werden.

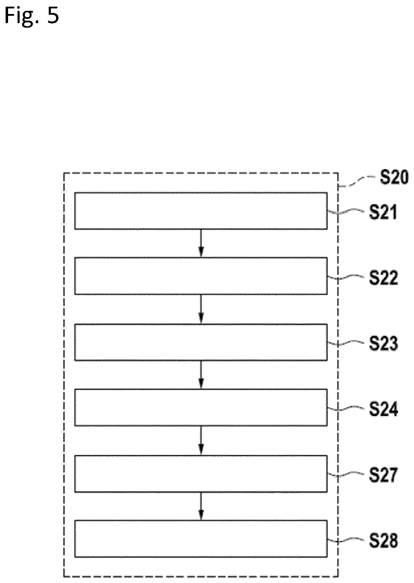

Fig. 5 ist ein Ausschnitt eines Flussdiagramms gemäß einem zweiten Ausführungsbeispiel des Verfahrens. Dieses unterscheidet sich hinsichtlich des Schritts S20 vom ersten Ausführungsbeispiel.

Gemäß dem zweiten Ausführungsbeispiel sind statt den Schritten S25, S26 die Schritte S27, S28 vorgesehen. Im Schritt S27 werden die Leiterabschnitte 13 außerhalb des Statorkerns 2 in den mit dem Nutabschluss 18 versehenen Nutauskleidungen 22 angeordnet. Im Schritt S28 werden die Leiterabschnitte 13 gemeinsam mit der Nutauskleidung 22 in der Nut 6 angeordnet.

Gemäß einem weiteren Ausführungsbeispiel des Stators 1 wird der Nutabschluss 18 unmittelbar auf den Leiterabschnitten 13 adhäsiv befestigt, wobei auf die Nutauskleidung 22 verzichtet werden kann.

Fig. 6 ist eine Prinzipskizze eines Ausführungsbeispiels eines Fahrzeugs 100 mit einem Ausführungsbeispiel einer elektrischen Maschine 101. Die elektrische Maschine umfasst einen Stator 1 gemäß einem der zuvor beschriebenen Ausführungsbeispiele sowie einen drehbar innerhalb des Stators 1 gelagerten Rotor 102. Die elektrische Maschine 101 ist eine permanent- oder fremderregte Synchronmaschine oder eine Asynchronmaschine und zum Antreiben des Fahrzeugs 100 eingerichtet. Das Fahrzeug 100 weist zudem Räder 102, von denen mindestens eins von der elektrischen Maschine angetrieben werden kann auf. Dieses kann dementsprechend ein batterieelektrisches Fahrzeug (BEV) oder ein Hybridfahrzeug sein.
- 1: Stator
- 2: Statorkern
- 3: Längsachse
- 4: Stirnseite
- 5: gegenüberliegende weitere Stirnseite
- 6: Nut
- 7: Joch
- 8: Aufnahmebereich für einen Rotor
- 9: Zähne des Statorkerns
- 10: Nutöffnung
- 11: Wicklungsanordnung
- 12: Reihung
- 13: Leiterabschnitte
- 14: Formleiter
- 15: Kopfabschnitt
- 16: Beinabschnitt
- 17: Rand
- 18: Nutabschlusselement
- 19: Trägerstreifen
- 20: erste Seite
- 21: zweiten Seite
- 22: elektrisch isolierende Nutauskleidung
- 23: Überlappung der Nutauskleidung 22
- 100: Fahrzeugs
- 101: elektrische Maschine
- 102: Räder

## Patentansprüche

1. Stator (1) für eine elektrische Maschine (101), aufweisend
- einen Statorkern (2), welcher eine Längsachse (3), eine Stirnseite (4), eine der Stirnseite (4) gegenüberliegende weitere Stirnseite (5), eine Nut (6) aufweist, die sich von der Stirnseite (4) zur weiteren Stirnseite (5) erstreckt und einen Rand (17) aufweist,
- eine Wicklungsanordnung (11), die eine Reihung (12) innerhalb der Nut (6) angeordneter Leiterabschnitte (13) aufweist und
- eine die Reihung (12) Leiterabschnitte (13) einhüllende elektrisch isolierende Nutauskleidung (22), und
- ein Nutabschlusselement (18), das zwischen der elektrisch isolierenden Nutauskleidung (22) und der Reihung (12) Leiterabschnitte (13) angeordnet ist.

2. Stator (1) nach Anspruch 1, wobei das Nutabschlusselement (18) in der Nut (6) eingepresst ist.

3. Stator (1) nach Anspruch 1, wobei das Nutabschlusselement (18) adhäsiv an der Nutauskleidung (22) befestigt ist.

4. Stator (1) nach Anspruch 3, wobei
das Nutabschlusselement (18) einen Trägerstreifen aufweist, der auf einer ersten Seite (20), die der elektrisch isolierenden Nutauskleidung (22) zugewandt ist eine adhäsiven Schicht aufweist.

5. Stator (1) nach einem der vorhergehenden Ansprüche, wobei die Leiterabschnitte (13) als Formleiter ausgebildet sind.

6. Verfahren zur Herstellung eines Stators (1) für eine elektrische Maschine (101), folgende Schritte aufweisend:
- Bereitstellen eines Statorkerns (2), welcher eine Längsachse (3), eine Stirnseite (4), eine der Stirnseite (4) gegenüberliegende weitere Stirnseite (5) und eine Nut (6) aufweist, die sich von der Stirnseite (4) zur weiteren Stirnseite (5) erstreckt und einen Rand (17) aufweist; und
- Anordnen einer elektrisch isolierenden Nutauskleidung (22) in der Nut (6)
- Anordnen eines Nutabschlusselementes (18) und einer Wicklungsanordnung (11) im Statorkern (2) derart, dass sich das Nutabschlusselement (18) zwischen der elektrisch isolierenden Nutauskleidung (22) und der Wicklungsanordnung (11) innerhalb der Nut (6) erstreckt.

7. Elektrische Maschine (101) zum Antreiben eines Fahrzeugs (100), aufweisend einen Stator (1) nach einem der Ansprüche 1 bis 5 oder einen durch ein Verfahren nach Anspruch 6 erhaltenen Stator (1), wobei die elektrische Maschine (101) ferner einen drehbar bezüglich des Stators (1) gelagerten Rotor aufweist.

8. Fahrzeug (100), aufweisend eine elektrische Maschine (101) nach Anspruch 7, die zum Antreiben des Fahrzeugs (100) eingerichtet ist.
